**Europäisches Patentamt**

**European Patent Office**

**Office européen des brevets**

(19)

(11) Veröffentlichungsnummer: **0 129 855**
**A2**

# (12) EUROPÄISCHE PATENTANMELDUNG

(21) Anmeldenummer: **84107124.4**

(22) Anmeldetag: **20.06.84**

(51) Int. Cl.⁴: **H 04 J 3/12**

(30) Priorität: **24.06.83 DE 3322851**

(43) Veröffentlichungstag der Anmeldung:
**02.01.85 Patentblatt 85/1**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Kahn, Klaus-Dieter, Dipl.-Ing.**
**Frühlingstrasse 26**
**D-8034 Germering(DE)**

(72) Erfinder: **Kühne, Friedrich, Dr.**
**Gabriele-Münter-Strasse 21**
**D-8000 München 71(DE)**

(54) Verfahren und Anordnung zur Übertragung von digitalen Hilfssignalen.

(57) Die Erfindung bezieht sich auf ein Verfahren und eine Anordnung zur Übertragung von digitalen Hilfssignalen in Digital-Richtfunksystemen. Als Verbesserung gegenüber bekannten Richtfunksystemen soll erreicht werden, daß die Übertragung von digitalen Hilfssignalen ohne Einschränkung zwischen End- oder Zwischenstellen einer Richtfunkverbindung bei geringem Aufwand möglich ist. Die Erfindung sieht hierzu vor, daß in den Zwischenstellen die digitalen Hilfssignale der Basisbandaufbereitung des Empfangsteils zugeführt und bitweise in für die Übertragung von Hilfssignalen vorgesehene Bitpositionen des Überrahmens überschrieben werden.

FIG 3

EP 0 129 855 A2

## Verfahren und Anordnung zur Übertragung von digitalen Hilfssignalen in Digital-Richtfunksystemen

Die Erfindung bezieht sich auf ein Verfahren und eine Anordnung zur Übertragung von digitalen Hilfssignalen in Digital-Richtfunksystemen mit zwei Endstellen und wenigstens einer zwischen diesen angeordneten Zwischenstelle mit einem Empfangs- und einem Sendeteil mittels Zusatzbits, deren Anordnung durch einen Überrahmen bestimmt ist.

In Richtfunksystemen ist es erforderlich, neben dem eigentlichen Basisbandsignal noch Hilfssignale für systeminterne Zwecke zu übertragen. Solche Hilfssignale werden benötigt für das Dienstgespräch, für Ersatzschaltbefehle und für die Fernüberwachung.

In Analog-Richtfunksystemen sind üblicherweise analoge Dienstkanäle mit den Eigenschaften von analogen Fernsprechkanälen vorgesehen. Die analogen Signale in diesen Kanälen werden im Basisband unterhalb des Frequenzbereiches des Nutzsignals übertragen.

In Digital-Richtfunksystemen werden analoge Dienstkanäle in der Weise realisiert, daß der digitalmodulierte Träger zusätzlich noch mit den analogen Hilfssignalen frequenzmoduliert wird. In Digital-Richtfunksystemen, die einen Überrahmen haben, können Hilfssignale in einfacher Weise in digitaler Form übertragen werden. Hierzu werden in der sendenden Endstelle Zusatzbits in das zu übertragende Digitalsignal eingefügt. Das Digitalsignal mit den Zusatzbits wird über Zwischenstellen zur empfangsseitigen Endstelle übertragen, wo das ursprüngliche Digitalsignal nach Herausnahme der Zusatzbits wieder

23. Juni 1983 / Klu 1 Kdg

hergestellt wird. Die Anordnung der Zusatzbits wird durch den Überrahmen bestimmt. Zusatzbits sind Rahmenkennungsbits, Paritätsbits und Dienstbits. Dienstbits werden für die RF-Kanalkennung und für die Übertragung der digitalen Hilfssignale benutzt. Hierfür ist ein Verfahren für die Einspeisung und Abzweigung der digitalen Hilfssignale an End- und Zwischenstellen erforderlich.

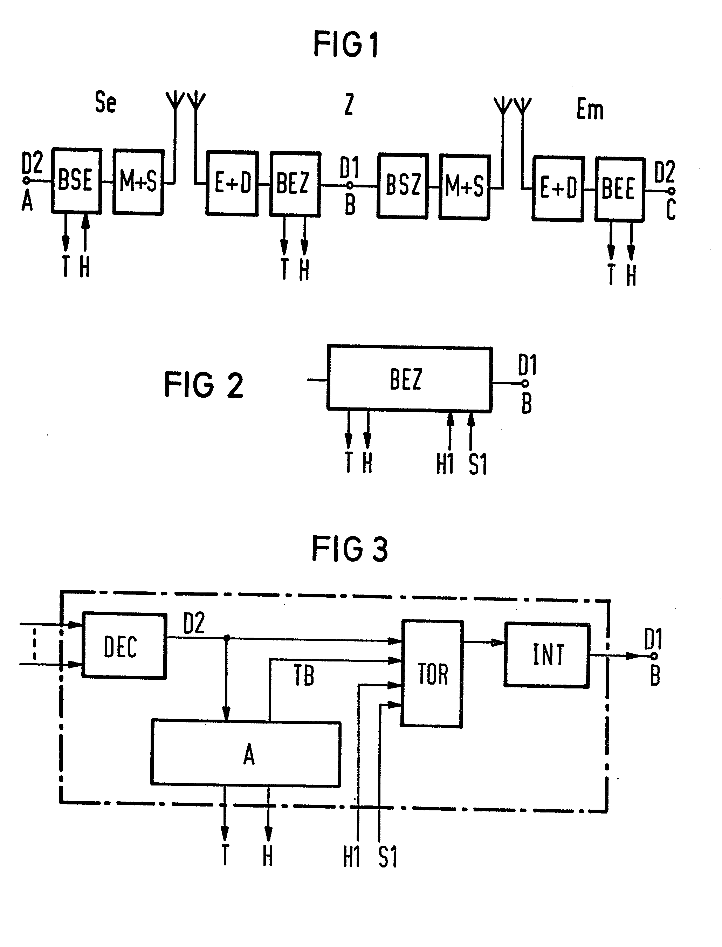

Ein Digital-Richtfunksystem mit Kanälen für digitale Hilfskanäle ist in der Zeitschrift telcom report 5 (1982) 2, Seiten 138-144 beschrieben. Das in diesem System angewandte Verfahren wird nachstehend anhand einer in Fig. 1 dargestellten Richtfunkverbindung aus zwei Endstellen und einer Zwischenstelle beschrieben. Dabei besteht der Endstellensender Se aus einer Basisbandaufbereitung BSE, einem Modulator M und einem Sendeteil S. Der Endstellenempfänger Em besteht aus einem Empfangsteil E, einem Demodulator D und einer Basisbandaufbereitung BEE. In der Zwischenstelle Z sind ein Zwischenstellenempfänger E und ein Zwischenstellensender S an ihren Basisbandanschlüssen verbunden. Der Zwischenstellenempfänger unterscheidet sich vom Endstellenempfänger durch die Basisbandaufbereitung BEZ. In entsprechender Weise unterscheidet sich der Zwischenstellensender vom Endstellensender durch die Basisbandaufbereitung BSZ. In der Basisbandaufbereitung BSE des Endstellensenders Se werden die Zusatzbits in das am Anschluß A zugeführte Digitalsignal D2 eingefügt. Das Digitalsignal mit erhöhter Bitrate wird über die Zwischenstelle Z bis zum Endstellenempfänger Em übertragen, wo die Basisbandaufbereitung BEE die Zusatzbits auswertet, aus dem Digitalsignal D1 entfernt und am Anschluß C das ursprüngliche Digitalsignal D2 abgibt. In der Zwischenstelle Z durchläuft das Digitalsignal D2 in den Basisbandaufbereitungen nur eine Differenzdecodierung in der empfangsseitigen Basisbandaufbereitung BEZ und eine Differenzcodierung in der sendeseitigen Basisbandaufbereitung BSZ. In der empfangsseitigen Basisbandaufbereitung

0129855

werden außerdem in einem Nebenweg die Zusatzbits ausgewertet.

Die Übertragung der digitalen Hilfssignale ist am Beispiel eines einzelnen Signals in Fig. 1 dargestellt. Die Basisbandaufbereitung BSE im Endstellensender Se hat einen Ausgang für den Takt T und einen Eingang für das digitale Hilfssignal H. Der Takt T ist an den Takt des Digitalsignals D2 gebunden. Die Schnittstelle für das digitale Hilfssignal ist deshalb kontradirektional, d.h. das digitale Hilfssignal H wird mit dem Takt T aus seiner Quelle abgefragt (vgl. hierzu die Zeitschrift telcom report 4 (1980), Seiten 344 bis 352). Die Bits des Hilfssignals werden als Zusatzbits an der dafür vorgesehenen Stelle des Überrahmens eingefügt. In den empfangsseitigen Basisbandaufbereitungen BEZ und BEE der Zwischenstelle Z und der empfangenden Endstelle Em werden diese Zusatzbits ausgewertet und als kontinuierliches Digitalsignal H zusammen mit dem zugehörigen Takt T an zwei Ausgängen abgegeben. Bei diesem System ist also eine Einfügung von Zusatzbits nur im Endstellensender möglich. Die Übertragung von digitalen Hilfssignalen ist daher nur von Endstelle zu Endstelle und von Endstelle zu Zwischenstelle möglich, nicht aber von Zwischenstelle zu Endstelle oder bei mehreren Zwischenstellen von einer Zwischenstelle zur anderen.

Der Erfindung liegt die Aufgabe zugrunde, ein Verfahren und eine Anordnung zu dessen Durchführung anzugeben, die die Übertragung von digitalen Hilfssignalen ohne Einschränkung zwischen End- oder Zwischenstelle einer Richtfunkverbindung bei geringem Aufwand ermöglichen.

Diese Aufgabe wird mit dem erfindungsgemäßen Verfahren in der Weise gelöst, daß in der (den) Zwischenstelle (n) die digitalen Hilfssignale der Basisbandaufbereitung des Empfangsteils zugeführt und bitweise in für die Übertragung von Hilfssignalen vorgesehene Bitpositionen des Überrahmens überschrieben werden.

In der Basisbandaufbereitung des Zwischenstellenempfängers werden wegen der Qualitätsüberwachung der Strecke und der RF-Kanalkennung die Zusatzbits ausgewertet. Dazu ist eine Erkennung des Überrahmens mit der Erzeugung von Rahmen und Bittakten erforderlich. Es ist daher mit minimalem Zusatzaufwand möglich, in der Basisbandaufbereitung zugeführte digitale Hilfssignale in die Positionen der entsprechenden Zusatzbits zu überschreiben.

In vorteilhafter Ausgestaltung des erfindungsgemäßen Verfahrens ist vorgesehen, daß jedem an einer Zwischenstelle zugeführten digitalen Hilfssignal ein binäres Steuersignal zugeordnet ist, dessen binärer Wert angibt, ob das Hilfssignal in die zugeordnete Bitposition überschrieben wird oder nicht.

Eine Anordnung zur Durchführung des erfindungsgemäßen Verfahrens ist in vorteilhafter Weise so ausgebildet, daß in der Basisbandaufbereitung des Empfangsteils der Zwischenstelle (n) ein Differenzdecodierer und Parallelserienwandler und eine an diesen angeschlossene Auswerteschaltung mit Anschlüssen für den Takt und das gegebene Hilfssignal aus der sendenden Endstelle angeschaltet sind sowie eine ebenfalls mit dem Ausgang des Differenzdecodierers und Parallelserienwandlers verbundene Torschaltung, der die zusätzlich zu übertragenden digitalen Hilfssignale und die zugehörigen Steuersignale von außen sowie die zugehörigen Bittakte aus der Auswerteschaltung zugeführt werden.

Der Ausgang der Torschaltung ist in vorteilhafter Weise über eine Schnittstellenschaltung (Interface) mit dem Sendeteil der Zwischenstelle (n) verbunden.

Nachstehend wird die Erfindung anhand eines in der Zeichnung dargestellten Ausführungsbeispieles näher erläutert.

Es zeigen

Fig. 2 die Anschlüsse an der Basisbandaufbereitung eines Zwischenstellenempfängers und

Fig. 3 den Schaltungsaufbau der Basisbandaufbereitung.

Fig. 2 zeigt die Anschlüsse an der Basisbandaufbereitung BEZ. Hierbei sind zusätzlich zu den Anschlüssen für den Takt T und das abgegebene Hilfssignal H aus der sendenden Endstelle zwei Anschlüsse für das in der Zwischenstelle zugeführte Hilfssignal H1 und das Steuersignal S1 vorgesehen. Das Hilfssignal H1 wird mit dem Takt T aus seiner Quelle abgefragt. Hat das Steuersignal z.B. den logischen Wert 1, so wird das Hilfssignal H durch H1 überschrieben und H1 zum Endstellenempfänger übertragen. Hat das Steuersignal z.B. den logischen Wert 0, so wird das im Endstellensender eingespeiste Hilfssignal H zum Endstellenempfänger weiter übertragen.

Fig. 3 zeigt eine Anordnung der Basisbandaufbereitung BEZ eines Zwischenstellenempfängers am Beispiel eines einzelnen digitalen Hilfssignals. Die Anordnung enthält einen Differenzdecodierer und Parallelserienwandler DEC , eine Schnittstellenschaltung INT und eine Auswerteschaltung A für Zusatzbits. Die Auswerteschaltung A wiederum enthält Schaltungen für Überrahmenerkennung, die zugehörigen Taktteiler und Torschaltungen für die Auslesung der Zusatzbits. In den Signalweg des Basisbandsignals D2 ist eine Torschaltung TOR eingefügt, und zwar nach dem Abzweigpunkt vom Differenzdecodierer und Parallelserienwandler DEC zur Auswerteschaltung A. Der Torschaltung TOR werden digitale Hilfssignale und die zugehörigen Steuersignale, zum Beispiel H1, S1 von außen sowie aus der Auswerteschaltung A die zugehörigen Bittakte, z.B. TB zugeführt. Wenn ein

Steuersignal seinen kennzeichnenden Zustand, z.B. den logischen Wert 1 annimmt, schaltet der zugehörige Bittakt TB das zugehörige Hilfssignal für eine Bitperiode des Digitalsignals D2 in den Signalweg durch.

4 Patentansprüche
3 Figuren

0129855

## Patentansprüche

1. Verfahren zur Übertraung von digitalen Hilfssignalen in Digital-Richtfunksystemen mit zwei Endstellen und wenigstens einer zwischen diesen angeordneten Zwischenstelle mit einem Empfangs- und einem Sendeteil mittels Zusatzbits, deren Anordnung durch einen Überrahmen bestimmt ist,
d a d u r h   g e k e n n z e i c h n e t ,
daß in der (den) Zwischenstelle (n) die digitalen Hilfssignale der Basisbandaufbereitung des Empfangsteils zugeführt und bitweise in für die Übertragung von Hilfssignalen vorgesehene Bitpositionen des Überrahmens überschrieben werden.

2. Verfahren nach Anspruch 1,
d a d u r c h   g e k e n n z e i c h n e t ,
daß jedem an einer Zwischenstelle zugeführten Hilfssignal ein binäres Steuersignal zugeordnet ist, dessen binärer Wert den Befehl für die vorgesehene Überschreibung des Hilfssignals in die zugeordnete Bitposition angibt.

3. Anordnung zur Durchführung des Verfahrens nach Anspruch 1 oder 2,
d a d u r c h   g e k e n n z e i c h n e t ,
daß in der Basisbandaufbereitung im Empfangsteil der Zwischenstelle (n) ein Differenzdecodierer und Parallelserienwandler und eine an diese angeschlossene Auswerteschaltung mit Anschlüssen für den Takt und das abgegebene Hilfssignal aus der sendenden Endstelle angeschaltet sind sowie eine mit dem Ausgang des Differenzdecodierers und Parallelserienwandlers verbundene Torschaltung, der die zusätzlich zu übertragenden digitalen Hilfssignale und die zugehörigen Steuersignale von außen sowie die zugehörigen Bittakte aus der Auswerteschaltung zugeführt werden.

4. Anordnung nach Anspruch 3,

d a d u r c h   g e k e n n z e i c h n e t ,

daß der Ausgang der Torschaltung über eine Schnittstellenschaltung (Interface) mit dem Sendeteil der Zwischenstelle
(n.) verbunden ist.

0129855

1/1

FIG 1

FIG 2

FIG 3